# EUROPEAN PATENT SPECIFICATION

(11) **EP 1 019 848 B1**
(45) Date of publication and mention of the grant of the patent: **10.11.2004**
(21) Application number: 98912617.2
(22) Date of filing: 23.03.1998
(51) Int. Cl.: G06F 17/24

(54) **FORM DATA ENTRY WITH MATCHING OF THE FIELD TYPE**
FORMULAREINGABE MIT VERGLEICH DES FELD-DATENTYPES
MASQUE DE SAISIE ASSOCIANT DES DONNEES A UN TYPE DE CHAMP CORRESPONDANT

(30) Priority: 21.03.1997 GB 9705926
(43) Date of publication of application: 19.07.2000
(73) Proprietor: Medical Talk Systems Limited, London SE16 1TP (GB)
(72) Inventor: SOLANKI, Guirish, London SE16 1TP (GB)
(74) Representative: Harland, Linda Jane
(86) International application number: PCT/GB1998/000879
(87) International publication number: WO 1998/043181

(56) References cited:
- EP-A- 0 598 598
- EP-A- 0 607 615
- WO-A-96/13009
- US-A- 5 168 548

## Description

The present invention relates to an improved system for document completion or form filling in the context of a word-processing system or for the entry of data into a database, in particular, to a data entry system comprising input means for the input of items of data; database means for storing a plurality of records, each record consisting of one or more data items, each data item being defined as being in one of a number of data categories; and means for storing at least one document format or data entry form, the document format or data entry form having at least one field for the addition of a data item from a predetermined category. One such data entry system is described in International patent application No WO 96/13009.

This document describes a system for the automatic filling in of data in forms for a database. However, in this prior art system, it is necessary to perform the data entry operation in a particular manner, firstly, by giving a navigation command and then selecting, in turn, from a menu of sub-menus and value lists. The system can only operate in a relatively rigid manner because of the hierarchical arrangement of data items within each form section. Thus, this system does not provide a solution to the problem identified by the present applicant, that is, to provide a data input form which can easily be used by unskilled users. Rather, International application WO 96/13009 is directed at an improved scheme for setting up data input forms using a hierarchical menu and value lists structure. It does not serve to facilitate navigation around the form in a manner which is of assistance to unskilled users.

Many word-processing and computer systems currently available offer a facility for inserting data from a computer record of some kind into a standard document format. Operations of this kind range from simply adding name and address details to a standard letter which is to be sent to a number of different addressees to inserting a large number of items of data into a complicated document format, for example, completing a patient's hospital record. In this specification, the term 'document' is to be taken to cover any file stored on a computer or word-processor or in a database, into which one or more items of data from a separate database are to be inserted to form a complete file for printing, display or further storage.

One difficulty with systems of this kind hitherto is that they may be relatively complicated to use, requiring skilled operators and careful input of information. It is, however, a well-recognised fact that the introduction of personal computers and word-processing systems has led to much more widespread generation of documents by relatively unskilled operators, for example, professionals of various kinds including doctors and lawyers, many of whom have little training in using such systems. It would be desirable, therefore, to provide a document generation facility in word-processing or computer systems which is easy for an unskilled operator to use.

Similar problems arise in connection with the entry of data into a database or other structured computer memory; data must be input into the correct field in the correct record. To facilitate entry of data into such databases and the like storage, many systems use a.graphical user interface (GUI) which provides a screen display having the appearance of a form to be completed; the user selects, with the aid of a mouse or in some other way, the appropriate box into which text or other data can be inserted. While the screen has the appearance of a document, no file containing both the 'document format' and the inserted data is ever generated. Instead, data is simply entered into the database fields represented graphically on screen by each box selected by the user prior to entry of the data items added to the database record. A graphical display of this kind, which leads to entry of data into a database rather than generation of a document will be referred to as a 'form' in this specification and its appended claims.

In accordance with a first aspect of the invention, as claimed, there is provided a data entry system characterised in that it comprises means for receiving a data item input at the input means and for comparing it with stored reference data to find a match for the input data item, and, hence, to identify the data category to which said input data item belongs; said means for receiving being operable to add the input data item to the document format or data entry form.at a field associated with the data category so identified.

In a preferred embodiment, the stored reference data comprises at least one register of information derived from at least some of the plurality of records stored in the database means but separate from them. This has the advantage over using the records in the database means themselves for reference purposes that a more sophisticated search package can be used to generate and search the register or registers, allowing speedier operation and more efficient comparison.

Preferably, the data entry system comprises.at least one register of commands; the means for receiving a data item input at the input means being operable to compare the said data item with the content of the register of commands to find a matching item and, hence, to identify commands input at the input means. With this arrangement, the user can simply input data and commands without the need to identify commands to the system, making the system easier for an unskilled user to use.

In a preferred form, the input means includes a voice recognition system capable of converting audible speech into electrical signals suitable for input to the means for receiving data items.

Voice recognition systems are in increasingly widespread use as an easy means for using computers or other electronic systems. In general, they permit the user to speak commands to the device in question. When incorporated into direct dictation systems, they also allow the user to dictate text directly into a word-processing system without the need for a keyboard or an intermediary skilled in typing. It will be appreciated that such systems allow input of two kinds; direct commands, for example, OPEN FILE, which cause operation of programs, and text or data, which is to be added as such to documents or records.

In addition, the invention provides a method of generating a data entry system of the kind referred to above for a particular application, the method comprising analysing a pre-existing document format or data entry form used in the said application to identify and characterise fields provided for the addition of data and to generate additional code for inclusion in operating software under which the application is to run and/or the application software for the application under which data is to be entered, and adding the code generated to the operating and/or application software, respectively; the added code acting in use to cause comparison of each input data item with the stored reference data and to add the input data item to the document format or data entry form at a field associated with the data category identified.

An embodiment of such a system will now be described in detail, by way of example, with reference to the drawings, in which :
Figure 1 is a schematic diagram of a system in accordance with he invention;
Figure 2 illustrates schematically storage of records comprising a plurality of data items; and
Figure 3 shows schematically a document or form.

A preferred embodiment of a system in accordance with the invention comprises a direct dictation unit 10 including a voice recognition system, a processor 12 which interfaces with both the direct dictation unit 10 and with a word-processor or database storage 14 or both. In practice, the three units 10, 12 and 14 may effectively be implemented using the processor of a single personal computer ('pc'), for example, a 486 series pc or a pc containing a pentium processor supplied by Intel Corporation provided with 16 or 32 Mb of RAM and 30 Mb of hard disc space. In addition, the system requires a suitable microphone 16, for example, the microphone supplied by Talking Technologies under the trade mark 'TALK MIC' which is particularly suitable for use in voice activated or direct dictation systems since it is capable of transmitting accurately the user's voice without corruption and free of extraneous background noise.

The direct dictation unit 10 which is used for voice activation of the system may, for example, be implemented by using one of a number of commercially available software packages, for example, IBM Voicetype, supplied by IBM Corporation, or Kurzweil Voice, supplied by Xerox Corporation and a suitable pc. These packages transform the input from the microphone 16 into input capable of recognition by the word processing system being used to generate the finished document or by data input software accessed by means of a form of the kind described above.

The system is particularly advantageous when used in combination with stored data held in computer memory 17, for example, a conventional database or other organised memory of some kind. The database may be used to store data, for example, lists of patients' names and addresses, dates of birth, and the like.

The database 17 may be associated with one or more documents of a word-processing system, as a source of external data, or may be associated with one or more forms, by means of which data can be added to the database or both. In a preferred embodiment, the screen of the pc may carry a display which serves both functions; the display may represent the format of a document, which can be printed off or stored as a complete file for further use, while, at the same time, functioning as a form for data entry.

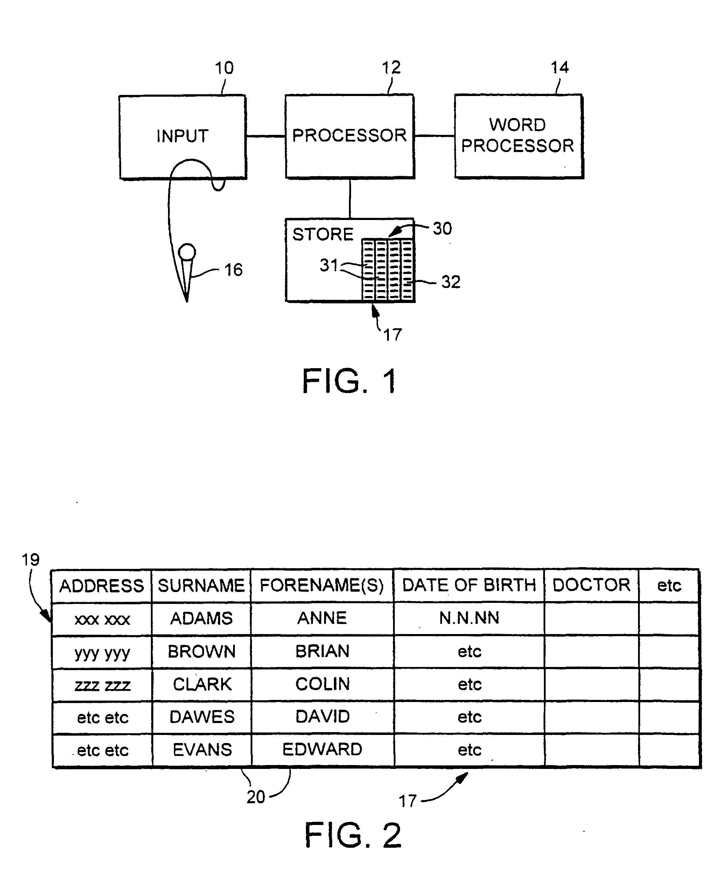

As is usual in commercially available databases, items of data of different types or categories may be associated or linked to form a single record 18. This can best be explained by likening the database to a grid of boxes or fields capable of storing information, as shown in Figure 2. Each row 19 of boxes (or 'record') may be used to store information about a single individual, each column 20 storing information of a particular type (or 'data category'), for example, dates of birth for a plurality of individuals.

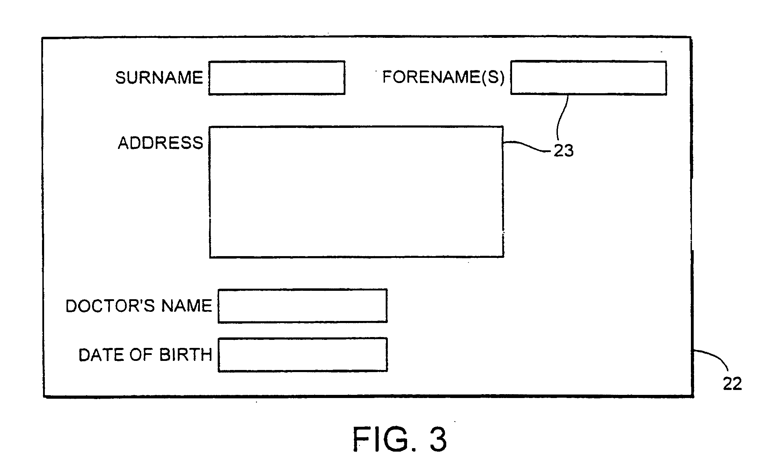

To use the system the user calls up a standard form, if data is to be entered, or document, which may be a letter or other document template. In either case, the form or document template 22 comprises of a number of boxes or fields 23 into which information of a particular kind is to be entered, in a similar manner to completing a conventional paper form.(See Figure 3). Data and commands can be input using the voice recognition unit 10 or, more conventionally, by using a keyboard (not shown).

The user can then start to add data to the document or form 22 by inputting data using the voice recognition unit 10.

It is to be noted that, whether we are considering data entry or document generation, there are two different situations which arise initially. In the first case, data to form a completely new record is to be added to the document or form. In the second case, a record already exists in the database and the first step towards data entry is to select the desired record from those in the database. However, once selection has taken place, addition of data to an existing record can proceed in the same manner as the addition of data to a newly created record.

Where data is to be added to either a new record or to a record already selected, the invention provides that it is not necessary for the user to identify the category of information being input. The processor 12 takes the input from the voice recognition unit 10 and compares it with stored data until it finds a match.

For example, if the data input is a patient's surname, the processor 12 will compare the information which has been inputted with the data items of a first category 20 within the database, for example, it may first compare the inputted surname with the column of data representing addresses. It will not, of course, find a matching data item in this first category and will then move on to compare the inputted data with items stored in the second category and so on.

When a matching item is found, the processor 12 causes the information to be added by the word-processor 14 to the selected document or form, inserting it at the appropriate field or 'box' 23 according to the category or type 20 of data item with which the processor 12 matched it. So, if the inputted data item matches a surname held in the database storage, the data will be added to the document in the box 23 which corresponds to the patient's surname on the form.

Although it is possible to select the appropriate category 20 by searching against the database 17 itself, it is preferable to select the category by reference to separate registries or indexes generated from the database 17 but held separately in memory 30. This allows more sophisticated and efficient indexing and searching techniques to be employed.

For example, searching and indexing packages available may permit the grouping or clustering or terms, in effect, a two-tier indexing allowing terms to be grouped together, for example, all conditions affecting the eye might be grouped or 'clustered' within the registry 31 or index for 'diagnoses' so that once it has been determined that a particular patient suffers from an eye problem, a match is sought only among those conditions which affect the eye. A separate registry 31 may be stored for each data category 20, some will in effect be a simple alphabetical or numeric listing of all data items in a category, others may be more complex. In addition, some registries may contain purely numeric data, for example, dates of birth, and others alphabetic data. Using suitable software for searching and indexing, the system can recognise, for example, purely numeric data, and will consequently not look for a match in categories containing alphabetic information.

Each registry 31 will, however, be associated with a single data category so that, if a match is found, it should in most cases provide a clear indication as to the category to which data should be added.

Because more sophisticated procedures can be used with a separately generated registry 31 than with the database itself, matching of a data item with an existing data entry can be achieved more quickly.

Once the first input data item has been matched and added at the appropriate location in the document or form, the user can input further items of data using the voice activation unit 10, each further data item being checked by the processor 12 against stored information in either the database 17 itself, or, preferably, the registries held in the memory 30. Once a match has been found, each additional data item can be added to the document or form 22 at the appropriate location 23.

Where data is to be added to an existing record 19 in the database 17 or a document is to be generated by importing data from an existing record 19 into a document template or where, as is preferred, the two operations are to be combined, the first step will, of course, be to select the required record 19. This can be achieved by using the same data matching procedure as is described above in connection with selection of an appropriate data category 20. Most users will, for speed, select a data item which is unique or nearly unique to a particular record 19, for example, the patient's surname. However, the user might only be able to recall a data item from the required record of the kind likely to give rise to multiple matches during the checking operation. In this instance, it can be arranged that the software causes all records containing a matched data item to be displayed so as to allow the user to select the required record 19. Alternatively, particularly in the case where separate structured registries are used for matching purposes, it is possible to arrange for matching against two or more input data items: a logical AND operation. For example, a doctor might recall simply that a patient whose record is to be updated, was admitted on a particular date with a particular condition. Using suitable search software it is straightforward to locate a record which contains data items matching the admission ate and the patient's condition.

As indicated above, once a record has been selected, additional data items can be added to the record in precisely the same manner as they are added to new records; each input item being checked against stored data to identify the appropriate data category 20 in which the item should be placed.

Preferably, the system is such that identification of the required record 19 in the database by the processor 12 causes the all data items from that record 19 for which there are corresponding boxes or locations 23 on the displayed form or document 22 to be displayed at the appropriate locations 23 in the document or form 22 automatically. Thus, in the example given, if the database storage also holds details of a patient's forenames, address, date of birth and doctor's name, these items can be added to the form 22, if the form has appropriate fields 23 for entry of these data items, automatically on finding a match for the input data item in a record held in the database 17.

The document or form 22 may include further fields or boxes 23 to which free text can be added by the user at will, using the voice activation or direct dictation unit 10. Thus, for example, the document or form might, in the example referred to above, include one or more fields into which a patient's case notes may be added by dictation.

In addition to data items, the voice recognition system or other input means 10 may also allow the user to input commands for navigating around the document or form 22 directly, for closing a particular operation or application or for selecting another form or document. It is possible, using the system of indexes or registries described above to avoid any need for the user to distinguish commands from other spoken input to the system.

The stored data held in the memory 30 may include a registry 32 of command words so that if the input is matched against an item in the commands registry 32 it is treated by the system as a command not as text or other data to be matched. The registry of commands might, for example, include words such as 'up', 'down' and 'next', as well as labels identifying particular fields 23, such as 'surname', 'doctor', 'd.o.b' used for moving from field to field 23 within a chosen form or document. It might also include a list of document and/or form names to enable the user to select the required form or document easily. Finally, the commands registry 32 might include more general commands such as 'open', 'close' or 'print' which can be used with any form or document.

whilst the systems described above have been described in connection with the input of data using a voice activation or direct dictation unit, it will be appreciated that other forms of input could also be used, for example, a conventional computer keyboard.

The system described allows for very easy and quick completion of documents and forms for printing or addition of data to database systems and records for storage by unskilled users, lessening or eliminating errors due to operator errors(bias) and making data entry consistent by permitting specific data items to be entered always in the same manner and format.

In the context of many widely used software packages, existing forms can easily be customised to function in this way, in particular, those defined using graphical user interface packages such as Visual Basic, Delphi, C++ or other software compatible with 'Active X' technology.

The Active X Technology has developed from a tool previously known as object linking & embedding - OLE - widely used by software developers to provide specific capabilities not available within the development environment. Such capabilities can be engineered by writing specific instructions to the computer's operating system or to other applications and then encapsulating these as a tool that 'plugs and plays'.

For example, it might be appropriate to insert a spreadsheet generated using one software package into a document generated using a word processing package having no spreadsheet capability. This could be achieved using the OLE technology which would allow the provision of specific instructions, recognisable by the operating system and by the word processing and spreadsheet software, the instructions effectively calling the spreadsheet package from within the word processing package and closing the spreadsheet package down again once it's use within the word processing software has been completed.

However, although the Active X technology permits the same object linking as was previously possible through OLE, it is a much broader concept and encompasses a much wider functionality, automating several tasks in one or more applications and having them called from another.

The Active X technology is a medium for creating simple or complex objects, applying properties to them, giving them methods, raising events and then providing a common shell of functionality and connectivity to the development space of the development programming language. Because the Active X technology consists of consistent methods which are recognised by major development languages as well as the operating systems found in a pc environment, the Active X technology allows for better communication and connectivity than was possible with OLE. Most major software suppliers now write their software products to be compatible with Active X technology.

In general, the term 'object' is used to describe any virtual or abstract item which is capable of having properties, and methods and raising events. For example, an application package like Microsoft Word is an object, as is a spreadsheet or a collection of data cells (a database), a single data cell or a text box. However, in the context of Active X technology, the term 'object' is limited to those objects, sometimes referred to as 'component objects' or 'window objects' which meet the requirements of a standard known as the Component Object Model ('COM').

The COM requires:
1. A common way for applications to access and perform operations on objects.
2. A mechanism for keeping track of whether an object is in use and for deleting the object when it is no longer needed.
3. A standard error reporting mechanism (instead of error codes and values).
4. A mechanism for applications to exchange objects.
5. A means for identifying objects and associating them with applications able to understand how those objects are implemented.

Using a component model application, there are no particular difficulties in determining how to handle methods, properties or events since these are called by reference to standard conventions automatically.

The specific instructions generated in the Active X technology to allow manipulation of objects meeting the COM standard are called 'controls'.

In the present case, the Active X control we have developed analyses the form or document in great detail and writes 'script codes' which allow the input means, for example, the voice recognition software referred to above, to communicate with the form or document without any skilled user involvement.

As set up in, for example, Visual Basic, a form consists of a plurality of 'controls' which consist of defined 'events', 'properties' and 'methods'. Events are actions built into the form; they may self-refer or may act on other events by means of 'methods', eg, 'open', 'close' or 'click'. 'Properties' relate to name, size and other similar descriptors. Examples of events are:
Form = load
Text 1= gotfocus
Data 1 = error
An example of a method is:
Richtextbox1.loadfile

For each form, the Active X control analyses the content of the form, its structure, the relationships between the contents of the form, and the relationship between the content of the form and any associated database. This is possible because the development software, in the example given, Visual Basic, complies with the component object model (COM). In particular, our Active X control identifies all events within the form, all methods which can be called and all properties which can be modified. It also lists and names all controls within a given form and their relative locations, which are generally defined by reference to the control's 'tab' property.

The Active X control also analyses the controls themselves, again identifying all events, methods or properties associated with each control. any links between the form and any associated database.

Having thus analysed the form in detail, the Active X control then performs a decision making process co determine which items on the form need coding for recognition by the input means, in the example given above, voice recognition software. It then generates codes automatically for the items selected by the decision making process and inserts these codes into the voice recognition software. These codes permit the input means 10 to recognise as commands input intended to enable further actions to be taken, or as control and navigation information allowing movement within the form or another record, to another form or to close the form. In addition codes are inserted into the voice recognition software to allow the system to identify the locations on the form or document 22 where converted speech input should be placed as text.

Thus, when the voice recognition software is selected by the user, the voice recognition software will have in its stored list of recognised commands all the words which will be needed to navigate around a form, select a particular location for entry of text or enter the text itself within selected locations on the form.

For example, if there is an input field 23 on the form or document 22 identified to the user by the label 'diagnosis', then the user can select the required field simply by speaking the word 'diagnosis'; the codes necessary for this will have been generated and inserted into the voice recognition software by the Active X control after the form has been analysed and an input field labelled 'diagnosis' identified by the control on the form or document. It will be appreciated that this is latter step is, in fact, a two-fold step; firstly, the code for recognition of the spoken word 'diagnosis' must be added, and, secondly, a command to move to that field within the form must be added so that every time the word is recognised the application enters any text or data following in the correct field.

The Active X control may, in addition, automatically generate codes for inclusion in the commands registry 32 or in the registries 31 or indexes used as described above to allocate input data to the correct data category 20 in a given record 19. So, as each data item is input it will be checked against existing entries and, if none is found, the Active X control will cause the required code for the new entry to be added to the relevant register for that data category once the user has identified it.

The Active X control is equally effective whether the template under analysis is a document for completion and printing or a data entry form for the input of data to a database or other record system. It will operate on any form or document generated using development software compatible with Active X technology.

## Claims

1. A data entry system comprising:
input means (10) for the input of items of data;
database means (17) for storing a plurality of records (19), each record (19) consisting of one or more data items, each data item being defined as being in one of a number of data categories (20); and
means (12) for storing at least one document format or data entry form, the document format or data entry form having at least one field for the addition of a data item from a predetermined category (20); the system being **charaterised in that** it comprises
means (12) for receiving a data item input at the input means (10) and for comparing it with stored reference data to find a match for the input data item, and, hence, to identify the data category (20) to which said input data item belongs; said means (12) for receiving being operable to add the. input data item to the document format or data entry form at a field associated with the data category (20) so identified.

2. A data entry system according to claim 1 wherein the stored reference data comprises at least some of the plurality of records (19) stored in the database means (17).

3. A data entry system according to claim 1 wherein the stored reference data comprises at least one register (31) of information derived from at least some of the plurality of records (19) stored in the database means (17) but separate from them.

4. A data entry system according to any preceding claim wherein the means (10) for receiving an input data item is operable to compare the input data item with stored reference data to find a match for the input data item, and, hence, to identify a record (19) stored in the database means (17).

5. A data entry system according to claim 4 in which identification of a record (19)causes one or more additional data items from the record (19)in which the matching item is held to be added to the document format or data entry form at fields dependent on the categories (20) of the said one or more additional items.

6. A data entry system according to any preceding claim comprising at least one register (31) of commands; the means for receiving a data item input at the input means (10) being operable to compare the said data item with the content of the register (31) of commands to find a matching item and, hence, to identify commands input at the input means.

7. A data entry system according to any preceding claim wherein the input means includes a voice recognition system capable of converting audible speech into electrical signals suitable for input to the means (10) for receiving data items.

8. A data entry method comprising:
storing in database means a plurality of records, each consisting of one or more data items, each data item being defined as being in one of a number of data categories;
storing at least one document format or data entry form, each document format or data entry form having at least one field for the addition of a data item from a predetermined category; and
inputting of an item of data; the method being **characterised by**
receiving an input data item; comparing the input data item with stored reference data to find a match for the input data item, and, hence, identifying the data category to which said input data item belongs; and adding the input data item to the document format or data entry form at a field associated with the data category so identified.

9. A data entry method according to claim 8 wherein the input data item is compared with stored reference data comprising at least some of the plurality of records stored in the database means.

10. A data entry method according to claim 8 wherein the input data item is compared with stored reference data comprising at least one register of information derived from at least some of the plurality of records stored in the database means but separate from them.

11. A data entry method according to any of claims 8 to 10 wherein an input data item is compared with stored reference data to find a match for the input data item, and, hence, to identify a record stored in the database means.

12. A data entry method according to claim 11 in which identification of a record causes one or more additional data items from the record in which the matching item is held to be added to the document format or data entry form at fields dependent on the categories of the said one or more additional items.

13. A data entry method according to any of claims 8 to 12 further comprising storing at least one register of commands; and comparing an input data item with the content of the register of commands to find a matching item and, hence, to identify commands input at the input means.

14. A data entry system according to any preceding claim wherein data items are input orally by means of a voice recognition system capable of converting audible speech into data items capable of comparison with stored reference data.

15. A method of generating a data entry system in accordance with claim 1 for a particular application, the method comprising analysing a pre-existing document format or data entry form used in the said application to identify and characterise fields provided for the addition of data and to generate additional code for inclusion in operating software under which the application is to run and/or the application software for the application under which data is to be entered, and adding the code generated to the operating and/or application software, respectively; the added code acting in use to cause comparison of each input data item with the stored reference data and to add the input data item to the document format or data entry form at a field associated with the data category identified.

16. A method according to claim 15 in which the code generated also causes at least one register of information to be derived from at least some of the plurality of records stored in the database means for comparison with input data items, the code acting in use to add to the said register of information as each subsequent data item is input.

17. A method according to claim 15 or 16 in which the application is a component object model application and the document format or data entry form is analysed and code for addition to the operating and/or application software generated by means of an Active X control as hereinbefore defined.

18. An Active X control as hereinbefore defined for use in generating a data entry system in accordance with claim 1 for a particular application.

## Patentansprüche

1. Dateneingabesystem, das Folgendes umfasst:
Eingabemittel (10) zum Eingeben von Datenelementen;
eine Datenbank (17) zum Speichern einer Mehrzahl von Datensätzen (19), wobei jeder Datensatz (19) aus einem oder mehreren Datenelementen besteht, wobei jedes Datenelement als zu einer aus einer Reihe von Datenkategorien (20) gehörig definiert ist; und
Mittel (12) zum Speichern von wenigstens einem Dokumentformat oder Dateneingabeformular, wobei das Dokumentformat oder Dateneingabeformular wenigstens ein Feld zum Hinzufügen eines Datenelementes aus einer vorbestimmten Kategorie (20) aufweist; wobei das System **dadurch gekennzeichnet ist, dass** es Folgendes umfasst:
Mittel (12) zum Empfangen eines mit dem Eingabemittel (10) eingegebenen Datenelementes und zum Vergleichen desselben mit gespeicherten Referenzdaten, um eine Übereinstimmung für das eingegebene Datenelement zu finden und somit die Datenkategorie (20) zu identifizieren, zu der das genannte eingegebene Datenelement gehört; wobei das genannte Empfangsmittel (12) die Aufgabe hat, das eingegebene Datenelement zu dem Dokumentformat oder Dateneingabeformular in einem Feld hinzuzufügen, das mit der so identifizierten Datenkategorie (20) assoziiert ist.

2. Dateneingabesystem nach Anspruch 1, wobei die gespeicherten Referenzdaten wenigstens einige aus der Mehrzahl von in der Datenbank (17) gespeicherten Datensätzen (19) umfasst.

3. Dateneingabesystem nach Anspruch 1, wobei die gespeicherten Referenzdaten wenigstens ein Register (31) mit Informationen umfasst, die von wenigstens einigen aus der Mehrzahl von in der Datenbank (17) gespeicherten Datensätzen (19) abgeleitet, aber von diesen getrennt sind.

4. Dateneingabesystem nach einem der vorherigen Ansprüche, wobei das Mittel (10) zum Empfangen eines eingegebenen Datenelementes die Aufgabe hat, das eingegebene Datenelement mit gespeicherten Referenzdaten zu vergleichen, um eine Übereinstimmung für das eingegebene Datenelement zu finden und somit einen in der Datenbank (17) gespeicherten Datensatz (19) zu identifizieren.

5. Dateneingabesystem nach Anspruch 4, bei dem die Identifikation eines Datensatzes (19) zur Folge hat, dass ein oder mehrere zusätzliche Datenelemente aus dem Datensatz (19), in dem sich das passende Element befindet, zu dem Dokumentformat oder Dateneingabeformular in Feldern in Abhängigkeit von den Kategorien (20) der genannten ein oder mehreren zusätzlichen Elemente hinzugefügt werden.

6. Dateneingabesystem nach einem der vorherigen Ansprüche, umfassend wenigstens ein Register (31) von Befehlen; wobei das Mittel zum Empfangen eines am Eingabemittel (10) eingegebenen Datenelementes die Aufgabe hat, das genannte Datenelement mit dem Inhalt des Registers (31) von Befehlen zu vergleichen, um ein passendes Element zu finden und somit die Befehle zu identifizieren, die mit dem Eingabemittel eingegeben wurden.

7. Dateneingabesystem nach einem der vorherigen Ansprüche, wobei das Eingabemittel ein Spracherkennungssystem beinhaltet, das hörbare Sprache in elektrische Signale umwandeln kann, die zur Eingabe in das Mittel (10) zum Empfangen von Datenelementen geeignet sind.

8. Dateneingabeverfahren, umfassend die folgenden Schritte:
Speichern einer Mehrzahl von Datensätzen in einer Datenbank, die jeweils aus einem oder mehreren Datenelementen bestehen, wobei jedes Datenelement als zu einer aus einer Reihe von Datenkategorien zugehörig definiert ist;
Speichern von wenigstens einem Dokumentformat oder Dateneingabeformular, wobei jedes Dokumentformat oder Dateneingabeformular wenigstens ein Feld zum Hinzufügen eines Datenelementes aus einer vorbestimmten Kategorie aufweist; und
Eingeben eines Datenelementes; wobei das Verfahren durch die folgenden Schritte gekennzeichnet ist:
Empfangen eines eingegebenen Datenelementes; Vergleichen des eingegebenen Datenelementes mit gespeicherten Referenzdaten, um eine Übereinstimmung für das eingegebene Datenelement zu finden und somit die Datenkategorie zu identifizieren, zu der das genannte eingegebene Datenelement gehört; und Hinzufügen des eingegebenen Datenelementes zu dem Dokumentformat oder Dateneingabeformular in einem Feld, das mit der so identifizierten Datenkategorie assoziiert ist.

9. Dateneingabeverfahren nach Anspruch 8, wobei das eingegebene Datenelement mit gespeicherten Referenzdaten verglichen wird, umfassend wenigstens einige aus der Mehrzahl von in der Datenbank gespeicherten Datensätzen.

10. Dateneingabeverfahren nach Anspruch 8, wobei das eingegebene Datenelement mit gespeicherten Referenzdaten verglichen wird, umfassend wenigstens ein Register von Informationen, die von wenigstens einigen aus der Mehrzahl von in der Datenbank gespeicherten Datensätzen abgeleitet, aber von diesen getrennt sind.

11. Dateneingabeverfahren nach einem der Ansprüche 8 bis 10, wobei ein eingegebenes Datenelement mit gespeicherten Referenzdaten verglichen wird, um eine Übereinstimmung für das eingegebene Datenelement zu finden und somit einen in der Datenbank gespeicherten Datensatz zu identifizieren.

12. Dateneingabeverfahren nach Anspruch 11, bei dem die Identifikation eines Datensatzes zur Folge hat, dass ein oder mehrere zusätzliche Datenelemente aus dem Datensatz, in dem sich das passende Element befindet, zu dem Dokumentformat oder Dateneingabeformular in Feldern in Abhängigkeit von den Kategorien der genannten ein oder mehreren zusätzlichen Elemente hinzugefügt wird.

13. Dateneingabeverfahren nach einem der Ansprüche 8 bis 12, ferner umfassend das Speichern von wenigstens einem Register von Befehlen; und Vergleichen eines eingegebenen Datenelementes mit dem Inhalt des Registers von Befehlen, um ein übereinstimmendes Element zu finden und somit Befehle zu identifizieren, die mit dem Eingabemittel eingegeben wurden.

14. Dateneingabesystem nach einem der vorherigen Ansprüche, wobei Datenelemente mündlich mit einem Spracherkennungssystem eingegeben werden, das hörbare Sprache in Datenelemente umwandeln kann, die mit gespeicherten Referenzdaten verglichen werden können.

15. Verfahren zum Erzeugen eines Dateneingabesystems nach Anspruch 1 für eine bestimmte Anwendung, wobei das Verfahren die folgenden Schritte umfasst: Analysieren eines existierenden Dokumentformats oder Dateneingabeformulars, das in der genannten Anwendung verwendet wird, um Felder zu identifizieren und zu charakterisieren, die zum Hinzufügen von Daten und zum Erzeugen von zusätzlichem Code für den Einschluss in Betriebssoftware bereitgestellt wurden, auf der die Anwendung laufen soll, und/oder in Anwendungssoftware für die Anwendung, unter der Daten eingegeben werden sollen, und Hinzufügen des erzeugten Codes jeweils in die Betriebs- und/oder die Anwendungssoftware; wobei der hinzugefügte Code beim Gebrauch dazu dient zu bewirken, dass die einzelnen eingegebenen Datenelemente mit den gespeicherten Referenzdaten verglichen werden und das eingegebene Datenelement zu dem Dokumentformat oder Dateneingabeformular in einem Feld hinzugefügt wird, das mit der identifizierten Datenkategorie assoziiert ist.

16. Verfahren nach Anspruch 15, bei dem der erzeugte Code auch bewirkt, dass wenigstens ein Register von Informationen von wenigstens einigen aus der Mehrzahl von in der Datenbank gespeicherten Datensätzen für einen Vergleich mit den eingegebenen Datenelementen abgeleitet wird, wobei der Code beim Gebrauch dazu dient, die nachfolgenden Datenelemente gleich nach ihrer Eingabe zu dem genannten Register von Informationen zu addieren.

17. Verfahren nach Anspruch 15 oder 16, bei dem die Anwendung eine Komponentenobjektmodellanwendung ist und das Dokumentformat oder Dateneingabeformular analysiert und Code zum Hinzufügen zur Betriebs- und/oder Anwendungssoftware mit Hilfe einer Active X Control wie oben definiert erzeugt wird.

18. Active X Control wie oben definiert für die Verwendung beim Erzeugen eines Dateneingabesystems nach Anspruch 1 für eine bestimmte Anwendung.

## Revendications

1. Système de saisie de données comprenant :
un moyen d'entrée (10) pour l'entrée d'éléments de données ;
un moyen de base de données (17) pour stocker une pluralité d'enregistrements (19), chaque enregistrement (19) consistant en un ou plusieurs éléments de données, chaque élément de données étant défini comme appartenant à l'une d'un nombre de catégories de données (20) ; et
un moyen (12) pour stocker au moins un format de document ou formulaire de saisie de données, le format de document ou formulaire de saisie de données ayant au moins un champ pour l'ajout d'un élément de données d'une catégorie prédéterminée (20) ; le système étant **caractérisé en ce qu'**il comprend
un moyen (12) pour recevoir un élément de données entré au niveau du moyen d'entrée (10) et pour le comparer à des données de référence stockées afin de trouver une concordance pour l'élément de données entré, et, ainsi, identifier la catégorie de données (20) à laquelle appartient ledit élément de données entré ; ledit moyen (12) pour recevoir étant exploitable pour ajouter l'élément de données entré au format de document ou formulaire de saisie de données au niveau d'un champ associé à la catégorie de données (20) ainsi identifiée.

2. Système de saisie de données selon la revendication 1, dans lequel les données de référence stockées comprennent au moins certains de la pluralité d'enregistrements (19) stockés dans le moyen de base de données (17).

3. Système de saisie de données selon la revendication 1, dans lequel les données de référence stockées comprennent au moins un registre (31) d'informations dérivées d'au moins certains de la pluralité d'enregistrements (19) stockés dans le moyen de base de données (17) mais distinct d'eux.

4. Système de saisie de données selon l'une quelconque des revendications précédentes, dans lequel le moyen (10) pour recevoir un élément de données entré est exploitable pour comparer l'élément de données entré à des données de référence stockées afin de trouver une concordance pour l'élément de données entré, et, ainsi, identifier un enregistrement (19) stocké dans le moyen de base de données (17).

5. Système de saisie de données selon la revendication 4, dans lequel l'identification d'un enregistrement (19) force l'ajout d'un ou de plusieurs éléments de données supplémentaires de l'enregistrement (19) dans lequel l'élément concordant est détenu dans le format de document ou formulaire de saisie de données au niveau de champs en fonction des catégories (20) desdits un ou plusieurs éléments supplémentaires.

6. Système de saisie de données selon l'une quelconque des revendications précédentes, comprenant au moins un registre (31) de commandes ; le moyen pour recevoir un élément de données entré au niveau du moyen d'entrée (10) étant exploitable pour comparer ledit élément de données au contenu du registre (31) de commandes afin de trouver un élément concordant et, ainsi, identifier des commandes entrées au niveau du moyen d'entrée.

7. Système de saisie de données selon l'une quelconque des revendications précédentes, dans lequel le moyen d'entrée comprend un système de reconnaissance de parole capable de convertir la parole audible en signaux électriques pouvant être entrés dans le moyen (10) pour recevoir des éléments de données.

8. Procédé de saisie de données comprenant :
le stockage dans un moyen de base de données d'une pluralité d'enregistrements, consistant chacun en un ou plusieurs éléments de données, chaque élément de données étant défini comme appartenant à l'une d'un nombre de catégories de données ;
le stockage d'au moins un format de document ou formulaire de saisie de données, chaque format de document ou formulaire de saisie de données ayant au moins un champ pour l'ajout d'un élément de données d'une catégorie prédéterminée ; et
l'entrée d'un élément de données ; le procédé étant **caractérisé par**
la réception d'un élément de données entré; la comparaison de l'élément de données entré à des données de référence stockées afin de trouver une concordance pour l'élément de données entré, et, ainsi, identifier la catégorie de données à laquelle appartient ledit élément de données entré ; et l'ajout de l'élément de données entré au format de document ou formulaire de saisie de données au niveau d'un champ associé à la catégorie de données ainsi identifiée.

9. Procédé de saisie de données selon la revendication 8, dans lequel l'élément de données entré est comparé à des données de référence stockées comprenant au moins certains de la pluralité d'enregistrements stockés dans le moyen de base de données.

10. Procédé de saisie de données selon la revendication 8, dans lequel l'élément de données entré est comparé à des données de référence stockées comprenant au moins un registre d'informations dérivées d'au moins certains de la pluralité d'enregistrements stockés dans le moyen de base de données mais distinct d'eux.

11. Procédé de saisie de données selon l'une quelconque des revendications 8 à 10, dans lequel un élément de données entré est comparé à des données de référence stockées afin de trouver une concordance pour l'élément de données entré, et, ainsi, identifier un enregistrement stocké dans le moyen de base de données.

12. Procédé de saisie de données selon la revendication 11, dans lequel l'identification d'un enregistrement force l'ajout d'un ou de plusieurs éléments de données supplémentaires de l'enregistrement dans lequel l'élément concordant est détenu au format de document ou formulaire de saisie de données au niveau de champs en fonction des catégories desdits un ou plusieurs éléments supplémentaires.

13. Procédé de saisie de données selon l'une quelconque des revendications 8 à 12, comprenant en outre le stockage d'au moins un registre de commandes ; et la comparaison d'un élément de données entré au contenu du registre de commandes afin de trouver un élément concordant et, ainsi, identifier des commandes entrées au niveau du moyen d'entrée.

14. Système de saisie de données selon l'une quelconque des revendications précédentes, dans lequel les éléments de données sont entrés oralement au moyen d'un système de reconnaissance de parole capable de convertir la parole audible en éléments de données pouvant être comparés à des données de référence stockées.

15. Procédé de génération d'un système de saisie de données selon la revendication 1 pour une application particulière, le procédé comprenant l'analyse d'un format de document ou formulaire de saisie de données préexistant utilisé dans ladite application pour identifier et caractériser des champs fournis pour l'ajout de données et générer un code supplémentaire à inclure dans le logiciel d'exploitation sous lequel l'application est exécutée et/ou le logiciel d'application de l'application sous laquelle les données doivent être entrées, et l'ajout du code généré au logiciel d'exploitation et/ou d'application, respectivement ; le code ajouté servant durant l'utilisation à lancer une comparaison de chaque élément de données entré aux données de référence stockées et à ajouter l'élément de données entré au format de document ou formulaire de saisie de données au niveau d'un champ associé à la catégorie de données identifiée.

16. Procédé selon la revendication 15, dans lequel le code généré entraîne aussi la dérivée d'au moins un registre d'informations à partir d'au moins certains de la pluralité d'enregistrements stockés dans le moyen de base de données pour leur comparaison à des éléments de données entrés, le code servant durant l'utilisation à ajouter audit registre d'informations quand chaque élément de données suivant est entré.

17. Procédé selon la revendication 15 ou 16, dans lequel l'application est une application de modèle d'objet composant et le format de document ou formulaire de saisie de données est analysé et le code pour l'ajout au logiciel d'exploitation et/ou d'application est généré au moyen d'une commande Active X telle que définie précédemment.

18. Commande Active X telle que définie précédemment, destinée à être utilisée dans la génération d'un système de saisie de données conformément à la revendication 1 pour une application particulière.
